Europäisches Patentamt

European Patent Office

Office européen des brevets

(11) Publication number: **0 179 531**
**B1**

# EUROPEAN PATENT SPECIFICATION

(45) Date of publication of patent specification: **11.01.89**

(51) Int. Cl.⁴: **G 02 B 3/04**

(21) Application number: **85201693.0**

(22) Date of filing: **16.10.85**

(54) Single bi-aspherical lens.

(30) Priority: **22.10.84 NL 8403198**

(43) Date of publication of application:
**30.04.86 Bulletin 86/18**

(45) Publication of the grant of the patent:
**11.01.89 Bulletin 89/02**

(84) Designated Contracting States:
**AT BE CH DE FR GB IT LI NL SE**

(56) References cited:
**EP-A-0 146 177**
**FR-A-2 271 585**
**FR-A-2 509 478**

**OPTICS LETTERS, vol. 4, no. 2, February 1979,
pages 70-72, Optical Society of America, US; J.
HAISMA et al.: "Realization of a bi-aspherical
objective lens for the Philips Video Long Play
system"**

(73) Proprietor: **N.V. Philips' Gloeilampenfabrieken
Groenewoudseweg 1
NL-5621 BA Eindhoven (NL)**

(72) Inventor: **Braat, Josephus Johannes Maria
c/o INT. OCTROOIBUREAU B.V. Prof. Holstlaan 6
NL-5656 AA Eindhoven (NL)**

(74) Representative: **Cobben, Louis Marie Hubert
et al
INTERNATIONAAL OCTROOIBUREAU B.V. Prof.
Holstlaan 6
NL-5656 AA Eindhoven (NL)**

## Description

The invention relates to a single lens having two aspherical refractive surfaces, which lens comprises a lens substrate and two layers of a transparent plastics having aspherical outer profiles on opposite sides of said substrate.

United States Patent Specification 4,027,952 describes a class of lenses having two aspherical surfaces, also referred to as bi-aspherical lenses, which class includes lenses which are suitable for use as read objectives in devices for reading optical record carriers containing, for example, a video program or an audio program. The small dimensions, of the order of 1 μm, of the information details on these record carriers impose stringent requirement on the read objective. For example, such an objective must be capable of forming a diffraction-limited radiation spot having a half-intensily diameter of the order of 1 μm, which means that for the customary wavelength of the read beam the objective must have a numerical aperture of approximately 0.45. Further, this objective should have a comparatively large diffraction-limited image field of the order of a few hundreds of micrometers. Currently the read devices for optical record carriers are equipped with an objective system which comprises at least three lens components which all have spherical surfaces.

As stated in said United States Patent Specification 4,027,952 such a composite and expensive objective system can be replaced by a single bi-aspherical lens. Such a lens can be manufactured simply and cheaply in large quantities using a so-called replica process. This process starts from a substrate, also referred to as preform, of a transparent and stable material such as glass. Both the object side and the image side of the preform are provided with a layer of a plastics when in a more or less liquid condition, such as for example an ultraviolet-curable polymerizable material. Onto these layers dies are pressed whose inner surfaces have profiles which are complementary to the desired aspherical profiles. After curing the layers, for example, by exposure to ultra-violet light the dies are removed and the desired lens is obtained

To date, the manufacture of lenses of this type starts from a preform having two spherical surfaces. In order to obtain a maximum image field the distance between these surfaces, measured along the optical axis, is smaller than the sum of the radii of curvature of the surfaces. The manufacture of such a preform is rather time-consuming and expensive, so that the cost price of the resulting bi-aspherical lens which is mainly determined by that of the preform, is high. It has also been proposed to manufacture bi-aspherical lenses whose preforms already have a certain degree of asphericity. However, the manufacture of such a lens is even more expensive.

Efforts continue to manufacture readers for optical record carriers, containing, for example a video program or an audio program, in large quantities in a simpler and cheaper manner. An important aspect of this is to make the objective system simpler and cheaper without a degradation in the read-out quality.

The present invention aims at provided a bi-aspherical lens which is suitable *inter alia* as a read-objective for optical record carriers and which can be manufactured simply and cheaply. The lens according to the invention is characterized in that the lens substrate takes the form of a sphere.

The invention is based on the recognition of the fact that for the uses of the bi-aspherical lens considered here the generally recognized disadvantages of lenses in the form of a sphere such as a small image field and a large image-field curvature, are more than outweighed by the great production engineering advantages of such a lens.

Preferably, a bi-aspherical lens for use in an optical read apparatus is characterized further in that the refractive index of the lens-substrate material lies between approximately 1.45 and approximately 1.65. The choice of this low refractive index ensures that for the imaging ratios provided by current read apparatuses the lens still has an acceptable free working distance. The free working distance in such read apparatuses is the distance between the last surface of the lens and the record carrier.

The lens in accordance with the invention cannot only be employed in read or write apparatuses for optical record carriers but also in other optical scanning systems in which an object or a scene is scanned in a point-by-point fashion, as in a scanning microscope.

Further in the design of readers for optical record carriers it is desirable to make the dimensions of the optical scanning unit, and in particular its length, as small as possible. The bi-aspherical lens in accordance with the invention is very suitable for this purpose.

An optical scanning unit comprising a radiation source which produces a scanning beam and an objective system for focussing the scanning beam so as to form a scanning spot on the surface to be scanned, is characterized in that the objective system is a single lens in accordance with the invention, that the radiation source emits a diverging beam and that the single-element lens is arranged in the diverging beam without a collimating element being interposed. The lens in accordance with the invention is very suitable for use in an optical scanning unit having an optical radiation path of minimal length, because, owing to its higher converging power, the lens preferably receives a diverging beam in order to ensure an adequate working distance.

Apart from the smaller length the scanning unit in accordance with the invention has the advantage that unlike scanning systems known so far it does not require a collimating element.

In order that the invention be more fully understood its use in an optical scanning unit for an apparatus for reading optical record carriers will now be described in more detail, by way of example, with reference to the accompanying drawing. In the drawing:

Fig. 1 shows schematically an example of a read unit comprising a single bi-aspherical objective lens in accordance with the invention, and

Fig. 2 is a perspective view of a read apparatus equipped with such a read unit.

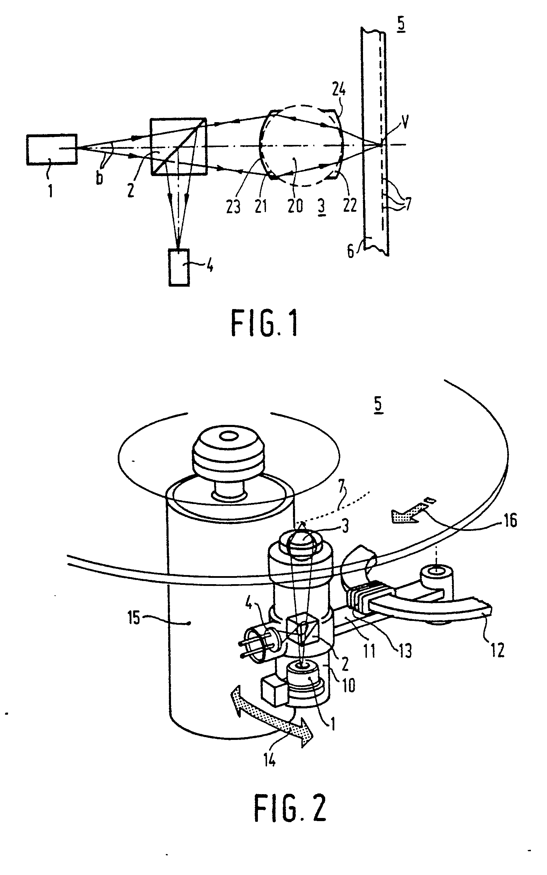

The scanning unit shown in Fig. 1 comprises a radiation source 1, for example a diode laser, a beam splitter 2, for example a beam splitter cube, and an objective lens 3. The reference numeral 5 denotes a small part of a radial cross-section of a disc-shaped record carrier. The information structure, which is reflecting in the present example is situated at the rear of the record carrier and comprises a multitude of information areas, not shown, arranged along information tracks 7. The numeral 6 refers to the transparent substrate of the record carrier, which is traversed twice by the scanning beam.

The information structure is scanned by the read beam b produced by the diode laser 1. The beam emerging from the diode laser is a diverging beam and fills the objective lens adequately. This lens forms a diffraction-limited radiation spot V on the information structure. The read beam is reflected by the information structure and, as the record carrier is rotated relative to the read beam, the beam is time-modulated in conformity with the information stored in the record carrier. By means of the beam-splitter cube 2 the modulated beam is separated from the beam emitted by the source 1 and is diverted to a radiation-sensitive detection system 4. This system supplies an electric signal which is time modulated in conformity with the information stored.

As is shown in Fig. 2 the elements 1, 2, 3 and 4 may be accommodated in a tube 10 which is mounted on a pivoted arm 11, which arm is movable relative to the record carrier 5 in the direction indicated by the arrow 14, i.e. substantially transversely of the longitudinal direction of the information tracks 7. The record carrier is rotated by a motor 15, so that the information tracks are moved relative to the read spot V in the direction indicated by the arrow 16.

In the read apparatus shown in Fig. 2 the read unit accommodated in the tube 10 is moved bodily both for coarse control and for fine control of the position of the read spot relative to the centre of a track to be read. As a result of this the objective lens is required to have only a limited image field. Instead of a pivoted arm it is possible to employ a rectilinearly movable slide for coarse and fine positioning of the read spot relative to the track centre.

Alternatively, separate course control and fine control may be provided. Coarse control is then effected by moving the entire read unit. Fine control is effected by moving an element of the read unit, for example the objective lens. This lens then has a slightly larger image field.

As is shown in Fig. 1, the bi-aspherical lens comprises a lens substrate or preform 20 and two thin layers 21 and 22 having aspherical outer profiles 23 and 24 on opposite sides of the substrate. These layers consist of a transparent plastics, for example a plastics which is polymerizable by ultraviolet light. This plastics can be deposited on the lens preform in an adequately soft condition, after which a die whose profile is complementary to the desired aspherical profile is pressed into said plastics. Subsequently, the plastics is exposed to U-V light, for example through the die, and then the die is removed, so that the finished lens is obtained without any further operations being necessary.

In accordance with the invention the lens preform is a sphere of, for example, glass or quartz. Such a sphere can be obtained in a simple and cheap manner by the use of mechanical techniques known *per se*. For example, square blocks glass may be used which are spun around in a drum until substantially spherical elements are obtained. These spherical elements may be polished, if necessary. Apart from the fact that it can be manufactured cheaply, a sphere has the advantage that it is automatically aligned during the replica process. The comparatively small image field of the spherical lens is still adequate for the use envisaged here under specific conditions. the lens preform may also be made of 2 transparent plastics.

The aspherical surfaces of the finished lens are defined unambiguously by the choice of the paraxial curvatures of the surfaces, i.e. the curvatures where the surfaces intersect the optical axis, i.e. by the radius of the sphere. Computing the other points of the aspherical surfaces is effected in accordance with the criteria that the Abbe Sine condition should be met and that the lens be free from spherical aberration, which means that the optical path length is the same for all rays from an object point on the axis to the associated image point on the axis. This computation may be effected in a manner as described in "Proc. Phys. Soc." B *62* (1949) by Wassermann and Wolf, pages 2 and further. Eventually this results in a collection of discrete points for each of the desired aspherical surfaces. If desired, approximative curves represented by series expansions may be drawn through this collection of curves. The coefficient of these series expansions then define the aspherical surfaces unambiguously.

In a practical embodiment of a read objective intended for reading, through a substrate 6 having a thickness of approximately 1.2 mm, an information structure whose track period is approximately 1.7 µm, whose track width is approximately 0.7 µm, the lens preform comprises a quartz sphere having a refractive index of approximately 2.5 mm. The layers 21 and 22 consist of an ultraviolet-curable material having a refractive index of approximately 1.56. The read objective has a focal length of approximately 3.8 mm and forms a radiation spot whose half-intensity diameter is approximately 1 µm. The lens has a numerical aperture of approximately 0.45. The image field has a radius of approximately 75 μm and the distance between the lens and the front surface of the record carrier is approximately 1.3 mm.

When glass having a refractive index of 1.55 is employed as the material for the sphere, the last-mentioned distance is approximately 0.9 mm and the radius of the sphere is approximately 3 mm.

An objective lens having a quartz substrate is suitable for use both in combination with a helium-neon laser beam having a wavelength of approximately 633 nm and a diode laser beam having a wavelength of approximately 785 nm. The change is spherical aberration of the substrate in the case of a variation in wavelength can be compensated for substantially by the attendant variation of the dispersion in the aspherical layers.

The fact that the invention has been described for a read apparatus does not mean that it is limited thereto. The single bi-aspherical lens may also be employed in apparatus for inscribing optical record carriers, which apparatus in principle has the same construction as the read apparatus but operates with a higher radiation intensity, said intensity being modulated in conformity with the information to be recorded. In addition, the invention may be employed in other optical scanning systems, such as a scanning microscope and, in general, in imaging systems comprising small lenses which are required to have a high imaging quality and a limited image field.

## Claims

1. A single lens having two aspherical refractive surfaces, which lens comprises a lens substrate and two layers of a transparent plastics having aspherical outer profiles on opposite sides of said substrate, characterized in that the lens substrate takes the form of a sphere.

2. A single lens as claimed in Claim 1, characterized in that the refractive index of the lens-substrate material lies between approximately 1.45 and approximately 1.65.

3. An optical scanning unit comprising a radiation source which produces a scanning beam and an objective system for focussing the scanning beam so as to form a scanning spot on a surface to be scanned, characterized in that the objective system is a single lens as claimed in Claim 1 or 2, that the radiation source emits a diverging beam and that the single lens is arranged in the diverging beam without a collimating element being interposed.

## Patentansprüche

1. Einzellinse mit zwei asphärischen Brechungsoberflächen, wobei die Linse ein Linsensubstrat und zwei Schichten aus transparentem Kunststoff mit asphärischen Aussenprofilen en gegenüberliegenden Seiten des Substrats enthält, dadurch gekennzeichnet, dass das Linsensubstrat die Form einer Kugel bekommt.

2. Einzellinse nach Anspruch 1, dadurch gekennzeichnet, dass der Brechungsindex des Linsensubstratmaterials zwischen 1,45 und etwa 1,65 liegt.

3. Optische Abtasteinheit mit einer Strahlungsquelle, die einen Abtaststrahl erzeugt, und mit einem Objektivsystem zur Fokussieren des Abtaststrahls zur Bildung eines Abtastflecks auf einer abzutastenden Oberfläche, dadurch gekennzeichnet, dass das Objektivsystem eine Einzellinse entsprechend Anspruch 1 oder 2 ist, dass die Strahlungsquelle einen divergierenden Strahl aussendet, und dass die Einzellinse im divergierenden Strahl ohne zwischenfügung eines Kollimatorelements angeordnet ist.

## Revendications

1. Lentille simple présentant deux surfaces réfringentes asphériques constituée par un substrat de lentille et deux couches de matière synthétique transparente présentant des profils extérieurs asphériques des deux côtés dudit substrat, caractérisée en ce que le substrat de lentille est sous forme d'une sphère.

2. Lentille simple selon la revendication 1, caractérisée en ce que l'indice de réfraction du matériau du substrat de lentille se situe entre environ 1,45 et environ 1,65.

3. Unité de balayage optique munie d'une source de rayonnement qui fournit un faisceau de balayage et un système d'objectif pour la focalisation du faisceau de balayage afin de former un spot de balayage sur une surface à balayer, caractérisée en ce que le système d'objectif est une lentille simple selon la revendication 1 ou 2, que la source de rayonnement émet un faisceau divergent et que l'élément de lentille simple est disposé dans le faisceau divergent sans interposition d'un élément de collimation.

FIG.1

FIG. 2